(19) Europäisches Patentamt
European Patent Office
Office européen des brevets

(11) EP 0 936 234 A1

(12) EUROPÄISCHE PATENTANMELDUNG

(43) Veröffentlichungstag:
**18.08.1999 Patentblatt 1999/33**

(51) Int. Cl.[6]: **C08G 18/32**, C09D 175/04, C09D 201/06

(21) Anmeldenummer: **99102115.5**

(22) Anmeldetag: **03.02.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **11.02.1998 DE 19805421**

(71) Anmelder:
**BASF Coatings Aktiengesellschaft**
**48165 Münster (DE)**

(72) Erfinder:
- **Zeller, Edgar**
  **68163 Mannheim (DE)**
- **Schwab, Peter**
  **67098 Bad Dürkheim (DE)**
- **Rink, Heinz-Peter**
  **48153 Münster (DE)**
- **Baumgart, Hubert**
  **48163 Münster (DE)**
- **Hagemeister, Edeltraut**
  **48268 Greven (DE)**
- **Farwick, Thomas**
  **48727 Billerbeck (DE)**

(74) Vertreter:
**Fitzner, Ulrich, Dr. et al**
**Dres. Fitzner & Münch**
**Rechts- und Patentanwälte**
**Lintorfer Strasse 10**
**40878 Ratingen (DE)**

## (54) Beschichtungsmittel und dessen Verwendung sowie Verfahren zu dessen Herstellung

(57) Die vorliegende Erfindung betrifft ein Beschichtungsmittel mit erhöhten Festkörpergehalten, das dadurch gekennzeichnet ist, daß es wenigstens ein ein Polyol I enthält, das erhältlich ist, indem man wenigstens ein Oligomer der allgemeinen Formel I,

$$R^1R^2C=[=CH-R-CH=]_n=CR^3R^4 \quad (I)$$

worin R = $-(-CH_2-)_m-$,
worin der Index m eine ganze Zahl von 2 bis 6 bedeutet, oder

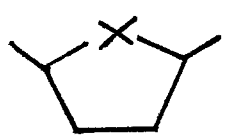

worin X = $-CH_2-$ oder ein Sauerstoffatom;

$R^1$, $R^2$, $R^3$ und $R^4$ unabhängig voneinander= Wasserstoffatome oder Alkyl; und

Index n = eine ganze Zahl von 1 bis 15;

hydroformyliert und die hierbei resultierenden aldehydgruppenhaltigen Produkte I zu den Polyolen I reduziert werden, welche gegebenenfalls teilweise oder vollständig hydriert werden.

EP 0 936 234 A1

## Beschreibung

Die vorliegende Erfindung betrifft ein Beschichtungsmittel, ein Verfahren zu dessen Herstellung sowie dessen Verwendung.

Die heute bekannten Lacke, z.B. Klar-bzw. Decklacke und Füller basieren auf Bindermitteln, die eine große Anzahl unterschiedlicher Funktionalitäten aufweisen müssen, damit benötigte Beschichtungseigenschaften erzielt werden können. Solche Lacksysteme sind beispielsweise aus den deutschen Patentschriften DE 44 07 415, DE 44 07 409 oder DE 43 10 414 bekannt. Der Nachteil all dieser Lacke ist, daß die Festkörpergehalte nicht unbegrenzt erhöht werden können. Eine Reduktion der Lösermittelemission ist somit bei diesen Systemen nur in engen Grenzen möglich.

Der vorliegenden Erfindung liegt somit die Aufgabe zugrunde, ein Beschichtungsmittel zur Verfügung zu stellen, das gegenüber den bisher bekannten Beschichtungsmitteln bei guter Kratzfestigkeit und hohem Reflow einen erhöhten Festkörpergehalt aufweist.

Diese Aufgabe wird erfindungsgemäß dadurch gelöst, daß es Polyole I enthält, die erhalten werden, indem Oligomere der Formel I,

$$R^1R^2C=[=CH\text{-}R\text{-}CH=]_n=CR^3R^4 \qquad (I)$$

worin R = $-(-CH_2-)_m-$,
worin der Index m eine ganze Zahl von 1 bis 6 bedeutet, oder

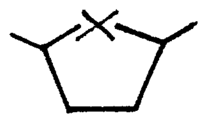

worin X = $-CH_2-$ oder ein Sauerstoffatom;

$R^1$, $R^2$, $R^3$ und $R^4$ unabhängig voneinander= Wasserstoffatome oder Alkyl; und

Index n = eine ganze Zahl von 1 bis 15;

hydroformyliert und die hierbei resultierenden aldehydgruppenhaltigen Produkte I zu den Polyolen I reduziert werden, welche gegebenenfalls teilweise oder vollständig hydriert werden.

Der Wert n in der Formel I steht für die Anzahl der zweiwertigen Reste R, welche in die von cyclischen Olefinen wie beispielsweise Cyclopropen, Cyclopenten, Cyclobuten, Cyclohexen, Cyclohepten, Norbonen, 7-Oxanorbonen oder Cycloocten abgeleiteten Oligomere I durch ringöffnende Metathesereaktion eingeführt wurden. Vorzugsweise weisen die erfindungsgemäß einsetzbaren Oligomergemische I bei einem möglichst großen Anteil, wie z.B. mindestens 40 Gew.-% (ermittelt durch die Flächenintegration der Gaschomatogramme; Gerät: Hewlett Packard; Detektor: Flammenionisations-Detektor; Säule; DB 5,30 m x 0,32 mm, Belegung 1μ; Temperaturprogramm: 60° C 5 min, isotherm, Heizrate 10° C/min Max: 300° C) einen Wert von $n > 1$ auf. Der Wert n und somit der Grad der ringöffnenden Metathese kann, wie weiter unten ausgeführt, durch die Aktivität des verwendeten Metathesekatalysators beeinflußt werden.

Die Reste $R^1$, $R^2$, $R^3$ und $R^4$ stehen unabhängig voneinander für Wasserstoff oder Alkyl, wobei der Ausdruck „Alkyl" geradkettige und verzweigte Alkylgruppen umfaßt.

Vorzugsweise handelt es sich dabei um geradekettige oder verzweigte $C_1$-$C_{15}$-Alkyl-, bevorzugt $C_1$-$C_{10}$-Alkyl, insbesondere bevorzugt $C_1$-$C_5$-Alkylgruppen. Beispiele für Alkylgruppen sind insbesondere Methyl, Ethyl, Propyl, 1-Methylethyl, Butyl, 1-Methylpropyl, 2-Methylpropyl 1,1-Dimethylethyl, n-Pentyl, 1-Methylbutyl, 2-Methylbutyl, 3-Methylbutyl, 1-2.Dimenthylpropyl, 1,1-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylpropyl, 1,2,2-Trimethylpropyl. 1-Ethylbutyl, 2-Ethylbutyl, 1-Ethyl-2-Methylpropyl, n-Heptyl, 1-Methylhexyl, 1-Ethylpentyl, 2-Ethylpentyl, 1-Propylbutyl, Octyl, Decyl, Dodecyl, etc.

Der Verzweigungsgrad und die Anzahl der Kohlenstoffatome der endständigen Alkylreste $R^1$, $R^2$, $R^3$ und $R^4$ hängen von der Struktur der acyclischen Monoolefine des verwendeten Kohlenwasserstoffgemisches und der Aktivität des Katalysators ab. Wie im folgenden genauer beschrieben wird, beinflußt die Aktivität des Katalysators den Grad der Kreuzmetathese (Selbstmetathese) der acyclischen Olefine unter Bildung strukturell neuer Olefine, in die sdann formal Cyclopenten im Sinne einer ringöffnenden Metathesepolymerisation insertiert wird.

Vorzugsweise werden Oligomerengemische eingesetzt, die einen erhöhten Anteil am Oligomeren mit nur einer terminalen Doppelbindung aufweisen. Das Oligomer wird vorzugsweise hergestellt, indem man ein ein cyclisches

Monoolefin wie Cyclopropen, Cyclobuten, Cyclopenten, Cyclohexen, Cyclohepten, Cycloocten, Norbonen oder 7-Oxanorbonen sowie acyclische Monoolefine enthaltendes Kohlenwasserstoffgemisches aus der Erdölverarbeitung durch Cracken ($C_5$-Schnitt) in einer homogenen oder heterogenen Metathesereaktion umsetzt.

Die Metathesereaktion umfaßt formal

a) die Disproportionierung der acyclischen Monoolefine des Kohlenwasserstoffgemisches durch Kreuzmetathese,

b) die Oligomerisation des cyclischen Monoelefins durch ringöffnende Metathese,

c) den Kettenabbruch durch Umsetzung der Oligomere aus b) mit einem acyclischen Olefin des Kohlenwasserstoffgemisches oder eines Produktes aus a),
wobei die Schritte a) und/oder b) und/oder c) mehrmals für sich alleine oder in Kombination durchlaufen werden können.

Schritt a)

Die Kreuzmetathese der acyclischen Monoolefine soll am Beispiel der Metathese von 1-Penten und 2-Penten erläutert werden:

$$\begin{matrix} CH_2{=}CH\text{-}C_3H_7 \\ + \\ CH_3\text{-}CH{=}CH\text{-}C_2H_5 \end{matrix} \rightleftharpoons \text{Propen} + \text{1-Buten} + \text{2-Hexen} + \text{3 Hepten}$$

Durch Kombination aus Kreuzmetathese verschiedener und Selbstmethathese gleicher acyclischer Olefine, wie z.B. der Selbstmetathese von 1-Penten zu Ethen und 4-Octen sowie durch mehrmaliges Durchlaufen dieser Reaktion werden eine Vielzahl von Monoolefinen mit unterschiedlicher Struktur und Kohlenstoffatomanzahl erhalten, die die Endgruppen der Oligomeren I bilden. Über den Anteil an Kreuzmetatheseprodukten, die mit steigender Aktivität des verwendeten Katalysators zunimmt, wird auch der Doppelbindungsanteil der Oligomeren beeinflußt. So wird z.B. bei der zuvor beschriebenen Selbstmethathese von 1-Penten Ethen freigesetzt, welches gegebenenfalls gasförmig entweichen kann, wobei ein Doppelbindungsäquivalent der Umsetzung entzogen wird. Gleichzeitig steigt der Anteil an Oligomeren ohne terminale Doppelbindungen. So wird in dem obigen Beispiel z.B. durch Insertion von cyclischem Monoolefin in 4-Octen ein Oligomer ohne terminale Doppelbindungen gebildet.

Schritt b)

Die durchschnittliche Anzahl an Insertionen des cyclischen Monoolefins in die wachsende Kette im Sinne einer ringöffnenden Metathesepolymerisation bestimmt das mittlere Molekulargewicht des gebildeten Oligomerengemisches I. Vorzugsweise werden durch das erfindungsgemäße Verfahren Oligomerengemische I mit einem mittleren Molekulargewicht von mindestens 274 g pro Mol gebildet, was einer durchschnittlichen Anzahl von drei Einheiten eines cyclischen Monoolefins pro Oligomer entspricht.

Schritt c)

Der Kettenabbruch erfolgt durch Umsetzung von Oligomeren, welches noch ein aktives Kettenende in Form eines Katalysatorkomplexes (Alkylidenkomplexes) aufweist, mit einem acyclischen Olefin, wobei im Idealfall ein aktiver Katalysatorkomplex zurückgewonnen wird. Dabei kann das acyclische Olefin unverändert aus dem ursprünglich zur Reaktion eingesetzten Kohlenwasserstoffgemisch stammen oder zuvor in einer Kreuzmetathese nach Stufe a) modifiziert worden sein.

Das Verfahren eignet sich ganz allgemein zur Herstellung von Oligomeren I aus Kohlenwasserstoffgemischen, die acyclische und cyclische Monoolefine enthalten. Monoolefine wie z.B. Cyclobuten, Cyclopenten, Cyclohexen, Cyclohepten, Norbonen oder 7-Oxanorbonen, insbesondere Cyclopenten. Varianten dieses Verfahrens werden beispielsweise in dem Artikel von M. Schuster und S. Bleckert in Angewandte Chemie, 1997, Band 109, Seiten 2124 bis 2144, beschrieben.

Vorzugsweise wird ein bei der Erdölverarbeitung großtechnisch anfallendes Kohlenwasserstoffgemisch verwendet, das gewünschtenfalls zur Entfernung von Dienen zuvor einer katalytischen Teilhydrierung unterzogen werden kann. Besonders geeignet für die Verwendung im vorliegenden Verfahren ist z.B. ein an gesättigten und ungesättigten $C_5$-Kohlenwasserstoffen angereichertes Gemisch ($C_5$-Schnitt). Zur Gewinnung des $C_5$-Schnittes kann z.B. beim Steamcracken von Naphtha anfallendes Pyrolysebenzin zuerst einer Selektivhydrierung unterzogen werden, um die enthaltenen Diene und Acetylene selektiv in die entsprechenden Alkane und Alkene zu überführen und anschließend einer fraktionierten Destillation unterworfen werden, wobei zum einen der für weitere chemische Synthesen wichtige $C_6$-$C_8$-Schnitt, der die aromatischen Kohlenwasserstoffe enthält, als auch der für das erfindungsgemäße Verfahren verwendete $C_5$-Schnitt anfallen.

Der $C_5$-Schnitt weist im allgemeinen einen Gesamtolefingehalt von mindestens 30 Gew.-%, bevorzugt mindestens 40 Gew.-%, insbesondere mindestens 50 Gew.-% auf.

Geeignet sind dabei $C_5$-Kohlenwasserstoffgemische mit einem Cyclopentengesamtgehalt von mindestens 5 Gew.-%, bevorzugt mindestens 10 Gew.-%, insbesondere mindestens 12 Gew.-%, und im allgemeinen nicht mehr als 30 Gew.-%, vorzugsweise nicht mehr als 20 Gew.-%.

Des weiteren weisen geeignete $C_5$-Kohlenwasserstoffgemische einen Anteil von Pentenisomeren an den acyclichen Monoolefinen von mindestens 70 -Gew.-% bevorzugt mindestens 80 Gew.-%, insbesondere mindestens 90 Gew.-% auf.

Das Herstellungsverfahren kann auch als großtechnisch anfallender $C_5$-Schnitt mit einem Gesamtolefinanteil von z.B. 50 bis 60 Gew.-%, wie etwa 56 %, einem Cyclopentenanteil von z.B. 10 bis 20 Gew.-%, wie etwa 15 Gew.-% und einem Anteil an Pentenisomeren von z.B. 33 bis 43 Gew.-%, wie etwa 38 Gew.-%, wobei etwa 16 Gew.-% auf das n-Penten und etwa 22 Gew.-% auf isomere Pentene entfallen, ausgeführt werden.

Nach einer speziellen Ausführungsform wird bei dem Herstellungsverfahren ein Kohlenwasserstoffgemisch verwendet, welches den $C_5$-Schnitt und eine acyclische $C_4$-Olefine enthaltende Erdölfraktion (Raffinat-2) umfaßt.

Nach einer anderen speziellen Ausführungsform des Herstellungsverfahrens wird ein Kohlenwasserstoffgemisch verwendet, welches den $C_5$-Schnitt und Ethen umfaßt. Dabei werden Oligomerengemische I mit einem erhöhten Doppelbindungsanteil erhalten. Dies wird zum einen durch Ethenolyse der im $C_5$-Schnitt enthaltenen acyclischen n- und iso-Pentene zu kürzerkettigen $\alpha$-Olefinen, wie Propen und 1-Buten, erreicht, die mit Cyclopenten in einer ringöffnenden Metathesereaktion unter Bildung von Oligomeren I mit jeweils einer terminalen Doppelbindung reagieren. In Gegenwart von Ethen wird auch die Selbstmetathese der acyclischen Olefine unter Bildung weiteren Ethens, wie z.B. die Selbstmetathese von 1-Penten zu Ethen und 4-Octen, welches als Kettenabbruchreagenz zu Produkten ohne terminale Doppelbindungen führt, unterdrückt. Zum anderen wird eine weitere Erhöhung des Doppelbindungsanteils durch die Ethenolyse von Cyclopenten mit Ehten zu 1,6-Heptadien erzielt. Dabei entstehen Oligomerenfolgen, die jeweils über zwei terminale Doppelbindungen verfügen. Vorzugsweise resultieren bei einer Verwendung der so erhaltenen Oligomerengemische I mit erhöhtem Doppelbindungsanteil zur Funktionalisierung Oligomerengemische I mit erhöhter Funktionalitätsdichte.

Geeignete Katalysatoren für die Metathese sind nach dem Stand der Technik bekannt und umfassen homogene und heterogene Katalysatorsysteme. Im allgemeinen basieren die für das Herstellungsverfahren geeigneten Katalysatoren auf einem Übergangsmetall der 6., 7. oder 8. Nebengruppe des Periodensystems, wobei vorzugsweise Katalysatoren auf Basis von Mo, W, Re und Ru verwendet werden.

Geeignete homogene Katalysatorsysteme sind im allgemeinen Übergangsmetallverbindungen, die gegebenenfalls in Kombination mit einem Cokatalysator und/oder gegebenenfalls in Gegenwart der Olefinedukte befähigt sind, einen katalytisch aktiven Metallcarbenkomplex zu bilden. Solche Systeme werden z.B. von R. H. Grubbs in Comprehensive Organomet. Chem., Pergamon Press, Ltd., New York, Bd. 8, S. 499 ff. (1982) beschrieben.

Geeignete Katalysator/Cokatalysator-Systeme auf W-, Mo- und Re-Basis können z.B. mindestens eine lösliche Übergangsmetallverbindung und ein alkylierendes Agens umfassen. Dazu zählen z.B. $MoCl_2(NO)_2(PR_3)_2/Al_2(CH_3)_3Cl_3$; $WCl_6/BuLi$; $WCl_6/EIAlCl_2(Sn(CH_3)_4)/EtOH$; $WOCl_4/Sn(CH_3)_4$; $WOCl_2(O\text{-}[2,6\text{-}Br_2\text{-}C_6H_3]/Sn(CH_3)_4$; $CH_3ReO_3/C_2H_5AlCl_2$, wobei die vier letztgenannten für das erfindungsgemäße Verfahren bevorzugt sind.

Weitere als Metathese-Katalysatoren geeignete Übergangsmetall-Alkyliden-Komplexe werden von R. R. Schrock in Acc. Chem. Res., 23, S. 158 ff. (1990) beschrieben. Allgemein handelt es sich um vierfach koordinierte Mo- und W-Alkylidenkomplexe, die zusätzlich zwei sperrige Alkoxy- und einen Imido-Liganden aufweisen. Dabei werden für das erfindungsgemäße Verfahren bevorzugt $((CH_3)_3CO)_2Mo(=N\text{-}[2,6\text{-}(i\text{-}C_3H_7)_2\text{-}C_6H_3])$ $(= CHC(CH_3)_2C_6H_5)$ und $[(CF_3)_2C(CH_3)O]_2Mo(=N\text{-}[2,5\text{-}(i\text{-}C_3H_7)\text{-}C_6H_3])$ $(=CH(CH_3)_2C_6H_5)$ verwendet.

Insbesondere werden als homogene Metathesekatalysatoren die Katalysatoren verwendet, die in der Angew. Chem. 107, S. 2179 ff. (1995), in J. Am. Chem. Soc. 118, S. 100 ff. (1996) sowie in J. Chem. Soc., Chem. Commun, S. 1127 ff. (1995) beschrieben sind. Dazu zählen insbesondere $RuCl_2(=CHR)(PR'_3)_2$, bevorzugt $RuCl_2(=CHC_6H_5)(P(C_6H_{11})_3)_2$, $(\eta^6\text{-p-Cymol})RuCl_2(p(C_6H_{11})_3)$ und 3 Moläquivalenten Diazoalkan ($(CH_3)_3SiCHN_2$ oder $C_6H_5CHN_2$) „in situ" erzeugt.

Geeignete heterogene Katalysatorsysteme umfassen im allgemeinen eine Übergangsmetallverbindung auf einem inerten Träger, die befähigt ist ohne Cokatalysator, durch Reaktion mit den Olefinedukten einen katalytischen aktiven Alkylidenkomplex zu bilden. Bevorzugt werden $Re_2O_7$ und $CH_3ReO_3$ verwendet.

Geeignete anorganische Träger sind die hierfür üblichen Oxide, insbesondere Silicium- und Aluminiumoxide, Alumosilikate, Zeolithe, Carbide, Nitride, etc. und deren Mischungen. Bevorzugt werden als Träger $Al_2O_3$, $SiO_2$ und deren Mischungen, gegebenenfalls in Kombination mit $B_2O_3$ und $Fe_2O_3$ verwendet.

Die zuvor genannten homogenen und heterogenen Katalysatorsysteme unterscheiden sich stark in ihrer katalytischen Aktivität, so daß die einzelnen Katalysatoren unterschiedliche optimale Reaktionsbedingungen für die Metathese aufweisen. Wie zuvor bereits beschrieben, beeinflußt die katalytische Aktivität bezüglich der Kreuzmetathese (Schritt a)) auch die Produktverteilung der von Cyclopenten abgeleiteten Oligomerengemische I. So sind die auf Ruthenium basierenden homogenen Katalysatorensysteme $RuCl_2(=CHC_6H_5)(P(C_6H_{11})_3)_3$, ($\eta^6$-p-Cymol)$RuCl_2(P(C_6H_{11})_3)/(CH_3)_3SICHN_2$ und ($\eta^6$-p-Cymol)$RuCl_2(P(C_6H_{11})_3)/C_6H_5CHN_2$ für das Herstellungsverfahren besonders geeignet. Dabei weist der erstgenannte Rutheniumkomplex eine höhere katalytische Aktivität als die beiden letztgenannten auf., was bei ansonsten gleichen Reaktionsbedingungen zu höheren Raum-Zeit-Ausbeuten führt. Gleichzeitig tritt beim ersten Komplex jedoch auch vermehrt die Kreutmetathese auf, wobei zum Teil auch Ethen freigesetzt wird und somit das erhaltene von Cyclopenten abgeleitete Oligomerengemisch I einen etwas geringeren Anteil an Doppelbindungen aufweist, was sich z.B. in einer geringeren Jodzahl ausdrückt. Zudem steht aufgrund der Kreuzmetathese eine größere Anzahl an acyclischen Olefinen ohne endständige Doppelbindungen zur Verfügung, so daß mit dem erstgenannten homogenen Rutheniumkatalysator vermehrt von Cyclopenten abgeleitete Oligomere I erhalten werden, die nur eine oder keine terminale Doppelbindung aufweisen. Die beiden letztgenannten Rutheniumkomplexe weisen eine etwas geringere katalytische Aktivität als der erstgenannte auf, so daß mit ihnen nach dem erfindungsgemäßen Verfahren von Cyclopenten abgeleitete Oligomerengemische I erhalten werden, die einen höheren Doppelbindungsanteil und somit eine höhere Jodzahl sowie einen größeren Anteil an terminalen Doppelbindungen aufweisen.

Auch die heterogenen Katalysatorensysteme weisen die zuvor beschriebenen Aktivitätsunterschiede mit der entsprechenden Beeinflussung der Metatheseprodukte auf. Wird für das Herstellungsverfahren $CH_3ReO_3$ auf $Al_2O_3$ als heterogener Katalysator verwendet, so weist dieser eine höhere katalytische Aktivität als das entsprechende homogene Katalysatporensystem aus $CH_3ReO_3/(C_2H_5)AlCl_2$ auf.

Vorteilhafterweise wird als heterogener Katalysator $Re_2O_7$ auf $Al_2O_3$ verwendet. Dieser weist eine $RuCl_2(=CHC_6H_5)$ $(P(C_6H_{11})_3)_2$ annähernd vergleichbare Aktivität sowie eine ähnliche Produktverteilung auf und kann nach Regeneration im Luftstrom bei erhöhten Temperaturen, wie z.B. etwa 550° C erneut eingesetzt werden.

Gewünschtenfalls können somit je nach verwendetem Katalysator von Cyclopenten abgeleitete Oligomerengemische I mit wechselnden Doppelbindungsanteilen und wechselnden Anteilen an terminalen Doppelbindungen erhalten werden.

Nach einer speziellen Ausführungsform des Herstellungsverfahrens wird als Metathesekatalysator ein homogener Katalysator auf Rutheniumbasis, ausgewählt unter $RuCl_2(=CHC_6H_5)$ $(P(C_6H_{11})_3)_2$, ($\eta^6$-p-Cymol)$RuCl_2$ $(P(C_6H_{11})3)/(CH_3)_3SiCHN_2$ und ($\eta^6$-p-Cymol)$RuCl_2(P(C_6H_{11})_3)/C_6H_5CHN_2$, verwendet, der dem Reaktionsgemisch als Lösung in einem organischen Lösungsmittel zugegeben wird. Geeignete Lösungsmittel sind z.B. aromatische Kohlenwasserstoffe, wie Toluol und Xylol sowie halogenierte Alkane, wie $CH_2Cl_2$, $CHCl_3$, etc.

Die Reaktionstemperatur liegt bei reaktiven Katalysatorsystemen bei -20 bis 200°C, bevorzugt 0 bis 100° C, insbesondere 20 bis 80° C.

Die Reaktion kann bei einem erhöhten Druck von bis zu 5 bar, bevorzugt bis zu 2 bar, oder insbesondere bevorzugt bei Umgebungsdruck durchgeführt werden.

Nach einer weiteren speziellen Ausführungsform des Herstellungsverfahrens wird als Metathesekatalysator ein heterogener Katalysator auf Rhenium-Basis, ausgewählt unter $CH_3ReO_3/Al_2O_3$ und bevorzugt $Re_2O_7/Al_2O_3$ verwendet, der dem Reaktionsgemisch ohne Lösungsmittelzusatz zugegeben wird.

Die Reaktionstemperatur liegt bei diesen, im Verglech zu den vorgenannten homogenen Katalysatorsystemen etwas weniger aktiven Katalysatoren bei etwa 20 bis 120° C, insbesondere 40 bis 80° C.

Die Reaktion wird vorzugsweise bei einem erhöhten Druck von 2 bis 20 bar, bevorzugt 3 bis 15 bar, insbesondere 4 bis 12 bar durchgeführt.

Die verfahrenstechnische Ausführung des Herstellungsverfahrens kann sowohl kontinuierlich als auch diskontinuierlich erfolgen. Geeignete Reaktionsapparaturen sind dem Fachmann bekannt und werden z.B. in Ullmanns Enzyklopädie der technischen Chemie, Bd. 1, S. 743 ff. (1951) beschrieben. Dazu zählen für das diskontinuierliche Verfahren z.B. Rührkessel und für das kontinuierliche Verfahren z.B. Rohrreaktoren.

Nach einer geeigneten diskontinuierlichen Variante des Herstellungsverfahrens kann z.B. der $C_5$-Schnitt an einem der zuvor als bevorzugt beschriebenen, homogenen Rutheniumkatalysatoren, welcher gewünschtenfalls im Reaktorbehälter „in situ" erzeigt wird, in einer Metathesereaktion zu den Cyclopenten abgeleiteten Oligomerengemischen I umgesetzt werden.

Nach einer weiteren geeigneten kontinuierlichen Variante des Herstellungsverfahrens kann z.B. der $C_5$-Schnitt an einem der zuvor als bevorzugt beschriebenen heterogenen Rheniumkatalysatoren in einem Rohrreaktor umgesetzt werden.

Nach beiden möglichen Verfahrensvarianten werden in Abhängigkeit vom verwendeten Katalysator und den übrigen Reaktionsparametern, vor allem der Reaktionstemperatur, Raum-Zeit-Ausbeuten von mindestens 10 g $l^{-1}$ $h^{-1}$, bevorzugt mindestens 15 g $l^{-1}$ $h^{-1}$, erzielt. Je nach Aktivität des Katalysators können jedoch auch wesentlich höhere Raum-Zeit-Ausbeuten bis etwa 500 g $l^{-1}$ $h^{-1}$ erzielt werden.

Die Auftrennung des Reaktionsgemisches erfolgt nach üblichen Verfahren. Dazu zählt z.B. die fraktionierte Destillation, gegebenenfalls unter vermindertem Druck, oder die Trennung bei erhöhten Temperaturen und Normalsdruck in einem Fallfilmverdampfer. Dabei können leichtsiedende Fraktionen, die noch nicht umgesetzte Olefine enthalten, gewünschtenfalls in die Reaktionsapparatur zurückgeführt werden. Vorteilhafterweise wird bei dem Herstellungsverfahren eine weitergehende Umsetzung der im $C_5$-Schnitt enthaltenen Olefine zu Oligomeren I erzielt, so daß die abgetrennten Leichtsieder ein $C_5$-Kohlenwasserstoffgemisch mit überwiegend gesättigten cyclischen und acyclischen Verbindungen umfassen.

Wie zuvor beschrieben, kann die Anzahl und die Lage der Doppelbindungen in den Oligomeren I durch die Reaktionsbedingungen, insbesondere den jeweils verwendeten Katalysator beeinflußt werden. Nach dem beschriebenen Verfahren werden Cyclopenten-Oligomere I erhalten, wobei die Jodzahl mindestens 250 g $I_2$/100 g Oligomere I, bevorzugt mindestens 300 g $I_2$/100 g Oligomere I beträgt.

Das mittlere Molekulargewicht dieser von cyclischen Monoolefinen, insbesondere Cyclopenten abgeleiteten Oligomere I beträgt mindestens 274 g/mol, was einem mittleren Umsatz von drei Cyclopenten-Einheiten pro Oligomer entspricht, wobei in diesem Fall ein Kettenabbruch durch ein acyclisches Penten (und nicht durch ein Kreuzmetatheseprodukt) angenommen wird.

Zur Herstellung der erfindungsgemäß zu verwendenden Polyole I werden die vorstehend im Detail beschriebenen Oligomere I in üblicher und bekannter Weise hydroformuliert. Im allgemeinen werden hierbei die Oligomeren I in Gegenwart von geeignete Übergangsmetalle enthaltenden Katalysatoren mit Wasserstoff und Kohlenmonoxid unter Normaldruck oder unter erhöhtem Druck bei Temperaturen von 50 bis 150°C zu aldehydgruppenhaltigen Produkten I umgesetzt.

Ein Beispiel für ein geeignetes Übergangsmetall ist Rhodium.

Die so erhaltenen Produkte I werden isoliert und in üblicher und bekannter Weise zu den erfindungsgemäß zu verwendenden Polyolen I reduziert. Hierfür kommen alle Reduktionsmittel in Betracht, mit denen Aldehydgruppen zu Hydroxylgruppen reduziert werden können. Beispiele geeigneter Reduktionsmittel sind Borhydride wie Natriumtetrahydroboranat oder Wasserstoff in Gegenwart von Hydrierungskatalysatoren.

Beispiele geeigneter Hydroformylierungs- und Reduktionsverfahren werden in der europäischen Patentschrift 0 502 839 beschrieben.

Die erfindungsgemäß zu verwendenden Polyole I können in üblicher und bekannter Weise teilweise oder vollständig hydriert werden. Hierfür kommen u.a. die vorstehend genannten Reduktionsmittel in Betracht.

Die erfindungsgemäß zu verwendenden Polyole I weisen eine Hydroxylzahl (OHZ) von 200 bis 650, insbesondere 250 bis 450, auf. Ihr mit Hilfe der Gelpermeationschromatographie mit Polystyrol als internem Standard ermitteltes zahlenmittleres Molekulargewicht $M_n$ liegt im Bereich von 400 bis 1.000, insbesondere 400 bis 600. Ihr mit Hilfe der Gelpermeationschromatographie und Polystyrol als internem Standard ermitteltes massenmittleres Molekulargewicht $M_w$ liegt im Bereich von 600 bis 2.000, insbesondere 600 bis 1.100. Die Uneinheitlichkeit $M_n/M_w$ liegt bei 1,4 bis 3, insbesondere 1,7 bis 1,9.

Ein Beispiel für ein besonders vorteilhaftes erfindungsgemäß zu verwendendes Polyol weist ein OHZ von 350, ein $M_n$ von 561 und ein $M_w$ von 1.068 auf.

Die erfindungsgemäß zu verwendenden Polyole I sind in den erfindungsgemäßen Beschichtungsmitteln in einer Menge von 5 bis 50 Gew.-%, bezogen auf den Festkörper des Beschichtungsmittels, enthalten. Besonders vorteilhafte erfindungsgemäße Beschichtungsmittel werden erhalten, indem man bis zu 40, vorzugsweise bis zu 30, besonders bevorzugt bis zu 20 und insbesondere bis zu 10 Gew.-% des Festkörpers eines Beschichtungsmittels durch mindestens ein erfindungsgemäß zu verwendendes Polyol I substituiert.

Für das hydroxyfunktionelle Bindemittel oder für die Mischung aus hydroxyfunktionellen Bindemitteln kommen vorzugsweise Bindemittel auf Basis von Polyacrylaten, Polyestern Polyurethanen, acrylierten Polyurethanen, acrylierten Polyestern, Polylactonen, Polycarbonaten, Polyethern und/oder (Meth)Acrylatdiolen in Betracht. Hydroxyfunktionelle Bindemittel sind dem Fachmann bekannt, und zahlreiche geeignete Beispiele sind marktgängig.

Vorzugsweise werden Polyacrylate, Polyester und/oder Polyurethane, insbesondere Polyacrylate und/oder Polyester verwendet.

Polyacrylatharze weisen die OHZ von 40 bis 240, vorzugsweise 60 bis 210, ganz besonders bevorzugt 100 bis 200, Säurezahlen von 0 bis 35, bevorzugt 0 bis 23, ganz besonders bevorzugt 3,9 bis 15,5, Glasübergangstemperaturen von -35 bis +70 °C, bevorzugt -20 bis +40 °C, ganz besonders bevorzugt -10 bis +15 °C und zahlenmittlere Molekulargewichte von 1500 bis 30000, bevorzugt 1500 bis 15000, ganz besonders bevorzugt 1500 bis 5000 auf.

Die Glasübergangstemperatur der Polyacrylatharze wird durch Art und Menge der eingesetzten Monomere bestimmt. Die Auswahl der Monomeren kann vom Fachmann unter Zuhilfenahme der folgenden Formel, mit der die Glasübergangstemperaturen von Polyacrylatharzen näherungsweise berechnet werden können, vorgenommen werden:

$$1/Tg = \sum_{n=1}^{n=x} Wn/Tg_n \; ; \; \Sigma_n W_n = 1$$

$Tg$ = Glasübergangstemperatur des Polyacrylatharzes
$W_n$ = Gewichtsanteil des n-ten Monomers
$Tg_n$ = Glasübergangstemperatur des Homopolymers aus dem n-ten Monomer
x = Anzahl der verschiedenen Monomeren

Maßnahmen zur Steuerung des Molekulargewichtes (z.B. Auswahl entsprechender Polymerisationsinitiatoren, Einsatz von Kettenübertragungsmitteln usw.) gehören zum Fachwissen des Durchschnittsfachmanns und müssen hier nicht näher erläutert werden.

Als hydroxyfunktionelle Bindemittelkomponente können beispielsweise auch Polyacrylatharze eingesetzt werden, die herstellbar sind, indem (a2) 10 bis 92, vorzugsweise 20 bis 60 Gew. -% eines Alkyl- oder Cycloalkylacrylates oder eines Alkyl- oder Cycloalkylmethacrylates mit 1 bis 18, vorzugsweise 4 bis 13 Kohlenstoffatomen im Alkyl- bzw. Cycloalkylrest oder Mischungen aus solchen Monomeren, (b2) 8 bis 60, vorzugsweise 12,5 bis 38,5 Gew.-% eines Hydroxyalkylacrylates oder eines Hydroxylalkylmethacrylates mit 2 bis 4 Kohlenstoffatomen im Hydroxyalkylrest oder Mischungen aus solchen Monomeren, (c2) 0,0 bis 5,0, vorzugsweise 0,7 bis 3,0 Gew.-% Acrylsäure oder Methacrylsäure oder Mischungen aus diesen Monomeren und (d2) 0 bis 50, vorzugsweise 0 bis 30 Gew.-% von (a2), (b2) und (c2) verschiedene, mit (a2), (b2) und (c2) copolymerisierbare ethylenisch ungesättigte Monomere oder Mischungen aus solchen Monomeren zu Polyacrylatharzen mit Hydroxylzahlen von 40 bis 240, vorzugsweise 60 bis 150, Säurezahlen von 0 bis 35, vorzugsweise von 5 bis 20, Glasübergangstemperaturen von -35 bis +70 Grad C, bevorzugt von -20 bis +40 Grad C und zahlenmittleren Molekulargewichten von 1500 bis 30000, vorzugsweise von 1500 bis 15000, (gelpermeationschromatographisch mit Polystyrolstandard bestimmt) polymerisiert werden. Als Beispiele für (a2)-Komponenten werden genannt: Methyl-, Ethyl-, Propyl-, n-Butyl-, Isobutyl-, tert.-Butyl-, Pentyl-, Hexyl-, Heptyl- und 2-Ethylhexylacrylat bzw. -methacrylat sowie Cyclohexylacrylat und Cyclohexylmethacrylat. Als Beispiele für (b2)-Komponenten werden genannt: Hydroxyethyl-, Hydroxypropyl- und Hydroxybutylacrylat bzw. -methacrylat. Als Beispiele für (d2)-Komponenten werden genannt: Vinylaromaten, wie beispielsweise Styrol, Vinyltoluol, alpha-Methylstyrol, alpha-Ethylstyrol, kernsubstituierte Diethylstyrole, Isopropylstyrol, Butylstyrole und Methoxystyrole; Vinylether, wie beispielsweise Ethylvinylether, n-Propylvinylether, Isopropylvinylether, n-Butylvinylether und Isobutylvinylether und Vinylester, wie beispielsweise Vinylacetat, Vinylpropionat, Vinylbutyrat, Vinylpivalat und der Vinylester der 2-Methyl-2-ethylheptansäure. Die Hydroxylzahl und die Säurezahl der Polyacrylatharze kann der Fachmann problemlos durch die Menge an eingesetzter Komponente (b2) bzw. (c2) steuern.

Als Polyacrylatkomponenten sind ferner die in der europäischen Patentanmeldung EP 0 767 185 sowie den US-Patenten 5 480 943, 5 475 073 und 5 534 598 genannten hydroxyfunktionellen Verbindungen geeignet.

Als hydroxyfunktionelle Bindemittelkomponente werden beispielsweise darüber hinaus Polyacrylatharze eingesetzt, die erhältlich sind, indem (A1) 10 bis 51 Gew.-%, vorzugsweise 25 bis 41 Gew,-%, 4-Hydroxy-n-butylacrylat oder 4-Hydroxy-n-butylmethacrylat oder eine Mischung aus 4-Hydroxy-n-butylacrylat und 4-Hydroxy-n-butylmethacrylat, vorzugsweise 4-Hydroxy-n-butylacrylat, (A2) 0 bis 36 Gew.-%, vorzugsweise 0,1 bis 20 Gew.-%, eines von (A1) verschiedenen hydroxylgruppenhaltigen Esters der Acrylsäure oder eines hydroxylgruppenhaltigen Esters der Methacrylsäure oder eines Gemisches aus solchen Monomeren, (A3) 28 bis 85 Gew.-%, vorzugsweise 40 bis 70 Gew.-% eines von (A1) und (A2) verschiedenen aliphatischen oder cycloaliphatischen Esters der Methacrylsäure mit mindestens 4 C-Atomen im Alkoholrest oder eines Gemisches aus solchen Monomeren, (A4) 0 bis 3 Gew.-%, vorzugsweise 0,1 bis 2 Gew.-%, einer ethylenisch ungesättigten Carbonsäure oder einer Mischung aus ethylenisch ungesättigten Carbonsäuren und (A5) 0 bis 20 Gew.-%, vorzugsweise 5 bis 15 Gew.-% eines von (A1), (A2), (A3) und (A4) verschiedenen ungesättigten Monomeren oder eines Gemisches aus solchen Monomeren zu einem Polyacrylatharz mit einer Hydroxylzahl von 60 bis 200, vorzugsweise von 100 bis 160, einer Säurezahl von 0 bis 35, vorzugsweise von 0 bis 25, und einem zahlenmittleren Molekulargewicht von 1500 bis 10000, vorzugsweise 2500 bis 5000, polymerisiert werden, wobei die Summe der Gewichtsteile der Komponenten (A1) bis (A5) stets 100% ergibt und die Zusammensetzung der Komponente (A3) so gewählt wird, daß bei alleiniger Polymerisation der Komponente (A3) ein Polymethacrylatharz mit einer einer Glasübergangstemperatur von +10 bis +100 Grad C, vorzugsweise von +20 bis +60 Grad C, erhalten wird.

Als Beispiele für die Komponente (A2) werden genannt: Hydroxyalkylester der Acrylsäure, wie z.B. Hydroxyethylacrylat und Hydroxypropylacrylat und Hydroxyalkylester der Methacrylsäure, wie z.B. Hydroxyethylmethacrylat und Hydroxypropylmethacrylat, wobei die Wahl so zu treffen ist, daß bei alleiniger Polymerisation der Komponente (A2) ein Polyacrylatharz mit einer Glasübergaugstemperatur von 0 bis +80 Grad C, vorzugsweise von +20 bis +60 Grad C erhalten wird. Als Beispiele für die Komponente (A3) werden genannt: aliphatische Ester der Methacrysäure mit 4 bis 20 C-Atomen im Alkoholrest, wie z.B. n-Butyl-, iso-Butyl-, tert.-Butyl-, 2-Ethythexyl-, Stearyl- und Laurylmethacrylat, und cycloaliphatische Ester der Methacrylsäure wie, z.B. Cyclohexylmethacrylat. Als Komponente (A4) werden vorzugsweise Acrylsäure und/oder Methacrylsäure eingesetzt. Als Beispiele für die Komponente (A5) werden genannt: vinylaromatische Kohlenwasserstoffe, z.B. Styrol, a-Alkylstyrol und Vinyltuluol, Amide der Acrylsäure und Methacrylsäure, z.B. Methacrylamid und Acrylamid, Nitrile der Acrylsäure und Methacrylsäure, Vinylether und Vinylester. Als Komponente (A5) werden vorzugsweise vinylaromatische Kohlenwasserstoffe, insbesondere Styrol, eingesetzt. Die Zusammensetzung der Komponente (A5) ist vorzugsweise so zu treffen ist, daß bei alleiniger Polymerisation der Komponente (A5) ein Polymer mit einer Glasübergangstemperatur von +70 bis +120 Grad C, vorzugsweise von +80 bis +100 Grad C erhalten wird. Die Herstellung dieser Polyacrylatharze kann nach allgemein gut bekannten Polymerisationsverfahren (siehe z.B. Houben-Weyl, Methoden der organischen Chemie, 4. Auflage, Band 14/1, Seite 24 bis 255 (1961)) erfolgen. Sie werden vorzugsweise mit Hilfe der Lösungsmittelpolymerisation hergestellt. Hierbei wird üblicherweise ein organisches Lösungsmittel bzw. Lösungsmittelgemisch vorgelegt und zum Sieden erhitzt. In dieses organische Lösungsmittel bzw. Lösungsmittelgemisch werden dann das zu polymerisierende Monomerengemisch sowie ein oder mehrere Polymerisationsinitiatoren kontinuierlich zugegeben. Die Polymerisation erfolgt bei Temperaturen zwischen 100 und 200 °C, vorzugsweise zwischen 130 und 180 °C. Als Polymerisationsinitiatoren werden vorzugsweise freie Radikale bildende Initiatoren eingesetzt. Initiatorenart und -menge werden üblicherweise so gewählt, daß bei der Polymerisationstemperatur während der Zulaufphase ein möglichst konstantes Radikalangebot vorliegt. Als Beispiele für einsetzbare Initiatoren werden genannt: Dialkylperoxide, z.B. Di-tert.-Butylperoxid und Dicumylperoxid, Hydroperoxide, z.B. Cumolhydroperoxid und tert.-Butylhydroperoxid, Perester, z.B. tert.-Butylperbenzoat, tert.-Butylperpivalat, tert.-Butylper-3,5,5-trimethylhexanoat und tert.-Butylper-2-ethylhexanoat, oder Bisazoverbindungen wie Azobisiobutyronitril. Die Polymerisationsbedingungen (Reaktionstemperatur, Zulaufzeit der Monomerenmischung, Menge und Art der organischen Lösungsmittel und Polymerisationsinitiatoren, evt. Mitverwendung von Molekulargewichtsreglern, z.B. Mercaptane, Thioglykolsäureester und Chlorwasserstoffe) werden so ausgewählt, daß die Polyacrylatharze ein zahlenmittleres Molekulargewicht wie angegeben (bestimmt durch Gelpermeationschromatographie unter Verwendung von Polystyrol als Eichsubstanz) aufweisen. Die Säurezähl kann vom Fachmann durch Einsatz entsprechender Mengen der Komponente (A4) eingestellt werden. Analoges gilt für die Einstellung der Hydroxylzahl. Sie ist über die Menge an eingesetzter Komponente (A1) und (A2) steuerbar.

Die Herstellung dieser Polymerisate wird beispeisweise in der internationalen Patentanmeldung WO97/17431 beschrieben.

Desweiteren können marktgängige Produkte, welche unter der Marke Joncryl$^R$ vertrieben werden, verwendet werden, beispielsweise Joncryl$^R$ SCX 922.

Geeignete Polyesterharze bzw. Alkydharze eingesetzt werden, sind herstellbar, indem (a1) eine cycloaliphatische oder aliphatische Polycarbonsäure oder eine Mischung aus solchen Polycarbonsäuren (b1)ein aliphatisches oder cycloaliphatisches Polyol mit mehr als zwei Hydroxylgruppen im Molekül oder eine Mischung aus solchen Polyolen (c1) ein aliphatisches oder cycloaliphatisches Diol oder eine Mischung aus solchen Diolen und (d1) eine aliphatische lineare oder verzweigte gesättigte Monocarbonsäure oder eine Mischung aus solchen Monocarbonsäuren in einem molaren Verhältnis von (a1) : (b1) : (c1) : (d1) = 1,0 : 0,2 - 1,3 : 0,0 - 1,1 : 0,0 - 1,4, vorzugsweise 1,0 : 0,5 - 1,2 : 0,0 - 0,6 : 0,2 - 0,9 zu einem Polyesterharz bzw. Alkydharz umgesetzt werden. Als Beispiele für den Bestandteil (a1) werden genannt: Hexahydrophtalsäure, 1,4-Cyclohexandicarbonsäure, Endomethylentetrahydrophtalsäure, Oxalsäure, Malonsäure, Bernsteinsäure, Glutarsäure, Adipinsäure, Pimelinsäure, Korksäure, Azelainsäure und Sebacinsäure. Als Beispiele für den Bestandteil (b1) werden genannt: Pentaerythrit, Trimethylolpropan, Trimethylolethan und Glycerin. Als Beispiele für den Bestandteil (c1) werden genannt: Ethylenglykol, Diethylenglykol, Propylenglykol, Neopentylglykol, 2-Methyl-2-propylpropandiol-1,3,2-Ethyl-2-butylpropandiol-1,3, 2,2,4-Trimethyl- pentandiol-1,5, 2,2,5-Trimethylhexandiol-1,6, Hydroxypivalinsäureneopentylglykolester und Dimethylolcyclohexan. Als Beispiele für den Bestandteil (d1) werden genannt: 2-Ethylhexansäure, Laurinsäure, Isooctansäure, Isononansäure und Monocarbonsäuzemischungen, die aus Kokosfett oder Palmkernfett gewonnen werden.

Die Herstellung von Hydroxylgruppen tragenden Polyester- und/oder Alkydharzen ist z.B. in Ullmanns Encyklopädie der technischen Chemie, dritte Auflage, 14. Band, Urban & Schwarzenberg, München, Berlin 1863, Seiten 80 bis 89 und Seiten 99 bis 105, in den Büchern: Résines Alkydes-Polyesters von J. Bourry, Paris Verlag Dunod 1952, Alkyd Resins von C.R. Martens, Reinhold Publishing Corporation, New York 1961 und Alkyd Resin Technology von T.C. Patton, Interscience Publishers 1962 beschrieben.

Darüberhinaus kommen auch Bindemittel auf der Basis von Polyurethan in Betracht. Urethan(meth)acrylate sind dem Fachmann wohl bekannt und brauchen daher nicht näher erläutert zu werden. Beispiele für geeignete Polyurethanharze sind die in den folgenden deutschen, europäischen und internationalen Patentschriften beschriebenen Harze: DE 44 01 544, DE 195 34 316, EP 0 708 788 und WO97/14731.

Durch den teilweisen Ersatz der beschriebenen Bindemittel bzw. Bindemittelgemische durch die erfindungsgemäß zu verwendenden Polyole I lassen sich überraschenderweise höhere Festkörpergehalte erzielen, ohne daß wesentliche Nachteile bezüglich der Eigenschaftsprofile der Beschichtungen auftreten. So ist es gelungen, bei deutlich höheren Festkörpergehalten der erfindungsgemäßen Beschichtungsmittel ebensogute Werte hinsichtlich der Kratzfestigkeit und Filmhärte bei vergleichbarer Säurebeständigkeit der Beschichtungen zu erzielen, wie dies nach dem Stand der Technik bisher nur unter Einhaltung von geringeren Festkörpergehalten möglich war. Erfindungsgemäß ist es damit insbesondere möglich, ein höheres Reflow-Potential und eine, bedingt durch den höheren Festkörpergehalt, Reduktion der Lösemittelemission zu erzielen.

Neben den beschriebenen Bindemittein sind in den erfindungsgemäßen Beschichtungsmitteln auch weitere nach dem Stand der Technik übliche Bestandteile enthalten. Hierbei ist es möglich, die erfindungsgemäßen Beschichtungsmittel als Ein- oder auch Mehrkomponentensysteme auszulegen. Derartige Systeme unterscheiden sich im wesentlichen durch die Art des eingesetzten Vernetzungsmittels. In beiden Fällen kommen alle Vernetzungsmittel in Betracht, welche mit Hydroxylgruppen unter den Härtungsbedingungen reagieren. Beispiele geeigneter Vernetzungsmittel sind Aminoplastharze, Siloxangruppen enthaltende Verbindungen oder Harze, Anhydridgruppen enthaltende Verbindungen oder Harze, blockierte und unblockierte Polyisocyanate und/oder Alkoxycarbonylaminotriazine, insbesondere aber blockierte Polyisocyanate und/oder Tris(alkoxycarbonylamino)triazine in Betracht.

Sowohl in Ein- als auch Zwei- oder Mehrkomponentensystemen können erfindungsgemäß blockierte Isocyanate oder eine Mischung aus blockierten Polyisocyanaten zum Einsatz kommen.

Die einsetzbaren blockierten Isocyanate sind vorzugsweise so ausgebildet, daß sie sowohl mit einem Blockierungsmittel (Z1) als auch mit einem Blockierungsmittel (Z2) blockierte Isocyanatgruppen enthält, wobei das Blockierungsmittel (Z1) ein Dialkylmalonat oder eine Mischung aus Dialkylmalonaten ist, das Blockierungsmittel (Z2) ein von (Z1) verschiedenes, aktive Methylengruppen enthaltendes Blockierungsmittel, ein Oxim oder eine Mischung aus diesen Blockierungsmitteln ist und das Äquivalentverhältnis zwischen den mit (Z1) blockierten Isocyanatgruppen und den mit (Z2) blockierten Isocyanatgruppen zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt.

Es können indes auch Dimethylpyrazol und/oder substituierte Triazole als Blockierungsmittel verwendet werden.

Das blockierte Isocyanat wird vorzugsweise wie folgt hergestellt:

Ein Polyisocyanat oder eine Mischung aus Polyisocyanaten wird in an sich bekannter Art und Weise mit einer Mischung aus den Blockierungsmitteln (Z1) und (Z2) umgesetzt, wobei die Mischung aus den Blockierungsmitteln (Z1) und (Z2) die Blockierungsmittel (Z1) und (Z2) in einem Molverhältnis enthält, das zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt.

Das Polyisocyanat bzw. die Mischung aus Polyisocyanaten kann mit der Mischung aus den Blockierungsmitteln (Z1) und (Z2) so weit umgesetzt werden, bis keine Isocyanatgruppen mehr nachweisbar sind. In der Praxis kann das den Einsatz von sehr großen Überschüssen an Blockierungsmitteln und/oder sehr lange Reaktionszeiten erfordern.

Es wurde gefunden, daß auch dann Lacke mit guten Eigenschaften erhalten werden, wenn mindestens 50, vorzugsweise mindestens 70 Prozent der Isocyanatgruppen des Polyisocyanates bzw. des Gemisches aus Polyisocyanaten mit der Mischung aus den Blockierungsmitteln (Z1) und (Z2) umgesetzt werden und die verbleibenden Isocyanatgruppen mit einer hydroxylgruppenhaltigen Verbindung oder einer Mischung aus hydroxylgruppenhaltigen Verbindungen umgesetzt werden. Als hydroxylgruppenhaltige Verbindungen werden vorzugsweise niedermolekulare aliphatische oder cycloaliphatische Polyole, wie Neopentylglykol, Dimethylolcyclohexan, Ethylenglykol, Diethylenglykol, Propylenglykol, 2-Methyl-2-propylpropandiol-1,3, 2-Ethyl-2-butylpropandiol-1, 3,2,2,4-Trimethylpentandiol-1,5 und 2,2,5-Trimethylhexandiol-1,6 oder das als Bestandteil (1) einsetzbare hydroxylgruppenhaltige Bindemittel eingesetzt.

Ein geeignetes blockiertes Polyisocyanat ist auch erhältlich, indem mit dem Blockierungsmittel (Z1) bzw. (Z2) blockierte Polyisocyanate in einem solchen Verhältnis gemischt werden, daß eine Mischung erhalten wird, in der das Äquivalent-Verhältnis zwischen den mit (Z1) blockierten Isocyanatgruppen und den mit (Z2) blockierten Isocyanatgruppen zwischen 1,0 : 1,0 und 9,0 : 1,0, vorzugsweise zwischen 8,0 : 2,0 und 6,0 : 4,0, besondere bevorzugt zwischen 7,5 : 2,5 und 6,5 : 3,5 liegt.

Prinzipiell können alle auf dem Lackgebiet einsetzbaren Polyisocyanate zur Herstellung des blockierten Polyisocyanats eingesetzt werden. Es ist jedoch bevorzugt, Polyisocyanate einzusetzen, deren Isocyanatgruppen an aliphatische oder cycloaliphatische Reste gebunden sind. Beispiele für derartige Polyisocyanate sind Hexamethylendiisocyanat, Isophorondiisocyanat, Trimethylhexamethylendiisocyanat, Dicyclohexylmethan- diisocyanat und 1,3-Bis-(2-isocyanatopropyl-2-)benzol (TMXDI) sowie Addukte dieser Polyisocyanate an Polyole, insbesondere niedermolekulare Polyole, wie z.B. Trimethylolpropan und von diesen Polyisocyanaten abgeleitete isocyanuratgruppen- und/oder biuretgruppenhaltige Polyisocyanate. Außerdem kommen noch 1,4-und/oder 1,4-Bis-(isocyanatomethyl)-cycloalkane wie 1,4- und/oder 1,4-Bis-(isocyanatomethyl)-cyclohexan.

Als Polyisocyanate werden besonders bevorzugt Hexamethylendiisocyanat und Isophorondiisocyanat, von diesen Diisocyanaten abgeleitete isocyanurat- oder biuretgruppenhaltige Polyisocyanate, die vorzugsweise mehr als zwei Isocyanatgruppen im Molekül enthalten sowie Umsetzungsprodukte aus Hexamethylendiisocyanat und Isophorondiisocyanat oder einer Mischung aus Hexamethylendiisocyanat und Isophorondiisocyanat mit 0,3 - 0,5 Aquivalenten eines niedermolekularen Polyols mit einem Molekulargewicht von 62 bis 500, vorzugsweise von 104 bis 204, insbesondere eines Triols, wie zum Beispiel Trimethylolpropan, eingesetzt.

Als Blocklerungsmittel (Z1) werden Dialkylmalonate oder eine Mischung aus Dialkylmalonaten eingesetzt. Als Beispiele für einsetzbare Dialkylmalonate werden Dialkylmalonate mit je 1 bis 6 Kohlenstoffatomen in den Alkylresten genannt, wie z.B. Malonsäuredimethylester und Malonsäurediethylestar, wobei Malonsäurediethylester bevorzugt eingesetzt wird. Als Blockierungsmittel (Z2) werden von (Z1) verschiedene, aktive Methylengruppen enthaltende Blockierungsmittel und Oxime sowie Mischungen aus diesen Blockierungsmitteln eingesetzt. Als Beispiele für Blockierungsmittel, die als Blockierungsmittel (Z2) einsetzbar sind, werden genannt: Acetessigsäuremethyl, ethyl-, -propyl-, butyl-, -pentyl-, hexyl -, heptyl-, octyl-, nonyl-, -decyl- oder -dodecylester, Acetonoxim, Methylethylketoxim, Acetylaceton, Formaldoxim, Acetaldoxim, Benzophenoxim, Acetoxim und Diisobutylketoxim. Als Blockierungsmittel (Z2) wird vorzugsweise ein Acetessigsäurealkylester mit 1 bis 6 Kohlenstoffatomen im Alkylrest oder eine Mischung aus solchen Acetessigsäurealkylestern oder ein Ketoxim bzw. eine Mischung aus Ketoximen eingesetzt. Besonders bevorzugt werden Acetessigsäureethylester oder Methylethylketoxim als Blockierungsmittel (Z2) eingesetzt.

Als Vernetzungsmittel können auch Tris(alkoxycarbonylamino)triazine der Formel

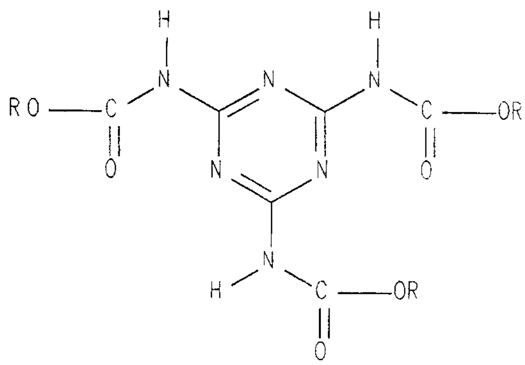

eingesetzt werden, wobei R=Methyl, und/oder Alkylgruppen, insbesondere Butylgruppen, bedeuten. Ebenso können Derivate der genannten Verbindungen zum Einsatz kommen. Bevorzugt werden für den Bestandteil (2) Tris(alkoxycarbonylamino)triazine eingesetzt, wie sie in der US-PS 5084541 beschrieben sind.

Die erfindungsgemäßen Beschichtungsmittel können auch Mehrkomponentensysteme, vorzugsweise Zweikomponentensystem, sein. In diesem Fall weist das Beschichtungsmittel eine zweite Komponente auf, die als Vernetzungsmittel mindestens ein gegebenfalls in einem oder mehreren organischen Lösungsmittel gelöstes nichtblockiertes Di- und/oder Polyisocyanat enthält.

Zusätzlich kann aber auch blockiertes Polyisocyanat oder eine Mischung aus blockierten Polyisocyanaten in der zweiten Komponente vorhanden sein.

Bei dem einsetzbaren freien Polyisocyanatbestandteil handelt es sich um beliebige organische Polyisocyanate mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 2000 mPa.s (bei 23 Grad C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Polyisocyanates zu verbessern und gegebenenfalls die Viskosität des Polyisocyanats auf einen Wert innerhalb der obengenannten Bereiche abzusenken.

Als Zusatzmittel geeignete Lösemittel für die Polyisocyanate sind beispielsweise Ethoxyethylpropionat, Butylacetat und ähnliches. Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben.

Beispielsweise geeignet sind Polyisocyanate und/oder isocyanatgruppenhaltigen Polyurethanpräpolymere, die durch Reaktion von Polyolen mit einem Überschuß an Polyisocyanaten hergestellt werden können und die bevorzugt niederviskos sind. Es können auch Isocyanuratgruppen und/oder Biuretgruppen und/oder Allophanatgruppen und/oder Urethangruppen und/oder Harnstoffgruppen und/oder Uretdiongruppen aufweisende Polyisocyanate eingesetzt werden. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexyhnethan-2,4'-diisocyanat oder Dicyclohexylmethan-4,4'-diisocyanat oder Mischungen aus diesen Polyisocyanaten eingesetzt.

Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Der Polyisocyanatbestandteil kann im übrigen auch aus beliebigen Gemischen der beispielhaft genannten freien Polyisocyanate bestehen.

Im einzelnen kann das erfindungsgemäße Beschichtungsmittel weiterhin UV-Absorber und Radikalfänger enthalten. Es kann ferner Katalysatoren für die Vernetzung enthalten. Hierfür kommen insbesondere metallorganische Verbindungen, vorzugsweise Zinn und/oder wismutorganische Verbindungen in Betracht. Ebenso können tertiäre Amine in Frage kommen. Das Beschichtungsmittel kann ferner Rheologiemittel sowie sonstige Lackhilfsstoffe enthalten. Selbstverständlich können auch Pigmente jeglicher Art, beispielsweise Farbpigmente wie Azopigmente, Phtalocyaninpigmente, Carbonylpigmente, Dioxazinpigmente, Titandioxid, Farbruß, Eisenoxide und Chrom- bzw. Kobaltoxide, oder Effektpigmente wie Metallplättchenpigmente, insbesondere Aluminiumplättchenpigmente und Perlglanzpigmente. Weiterhin kann das erfindungsgemäße Beschichtungsmittel ggfs. noch übliche Hilfsmittel und/oder Additive enthalten, beispielsweise Slipadditive, Polymerisationsinhibitoren, Mattierungsmittel, Entschäumer, Verlaufsmittel und filmbildende Hilfsmittel, z.B. Cellulose-Derivate, oder andere, in Basislacken üblicherweise eingesetzten Additive. Diese üblichen Hilfsmittel und/oder Additive werden üblicherweise in einer Menge von bis zu 15 Gew.-%, bevorzugt 2 bis 9 Gew.-%, bezogen auf das Gewicht des Beschichtungsmittels ohne Pigmente und ohne Füllstoffe, eingesetzt.

Die Herstellung des erfindungsgemäßen Beschichtungsmittels erfolgt in erfindungsgemäßer Verfahrensweise, indem 5 bis 50 Gew.-%, vor allem aber bis zu 40, vorzugsweise bis zu 30, besonders bevorzugt bis zu 20 und insbesondere bis zu 10 Gew.-% des Festkörpers eines Beschichtungsmittels durch mindestens ein erfindungsgemäß zu verwendendes Polyol I substituiert wird. Hierfür werden die üblichen Methoden wie das Zusammengeben der einzelnen Bestandteile und ihr Vermischen unter Rühren angewandt. Die Herstellung des aus zwei oder mehr Komponenten bestehenden Beschichtungsmittels erfolgt ebenfalls mittels Rühren bzw. Dispersion unter Verwendung der üblicherweise eingesetzten Vorrichtungen, beispielsweise mittels Dissolver o.ä. oder mittels ebenfalls üblicherweise eingesetzter 2-Komponenten-Dosier- und -mischanlagen.

Das erfindungsgemäße Beschichtungsmittel ist vorzugsweise als nichtwäßrige Lösung oder Dispersion (i.e. mit organischen Lösungsmitteln) formuliert. Hierfür können die in der Lackherstellung üblichen organischen Lösungsmittel Verwendung finden.

Das erfindungsgemäße Bindemittelgemisch wird vorzugsweise zur Herstellung von Ein- oder Mehrschichtlackierungen und besonders bevorzugt zur Herstellung von Decklacken eingesetzt. Es kann aber auch zur Herstellung eines über einer Basislackschicht zu applizierenden Klarlacks, beispielsweise eines Klarlacks einer nach dem naß-in-naß-Verfahren hergestellten Mehrschichtlackierung bestimmt sein. Darüber hinaus kann es auch als Grundierung oder Füller verwendet werden. Selbstverständlich können die Kunststoffe oder die anderen Substrate auch direkt mit dem Klarlack oder dem Decklack beschichtet werden.

Schließlich können die Beschichtungsmittel auch auf andere Substrate, wie beispielsweise Metall, Kunststoff, Glas, Holz oder Papier, appliziert werden. Die Applikation erfolgt mit Hilfe üblicher Methoden, beispielsweise durch Spritzen, Rakeln, Tauchen oder Streichen.

Die Beschichtungsmittel können sowohl bei der Serien- als auch bei der Reparaturlackierung von Automobilkarosserien eingesetzt werden. Sie werden bevorzugt aber im Bereich der Serienlackierung eingesetzt.

Die erfindungsgemäßen Beschichtungsmittel werden vorzugsweise bei Temperaturen von Raumtemperatur bis zu 180 °C gehärtet. Besonders bevorzugt sind Temperaturen zwischen 60 und 180 °C. In speziellen Anwendungsformen der erfindungsgemäßen Beschichtungsmittel können auch tiefere Härtungstemperaturen von 60 bis 160 °C angewendet werden.

Die Erfindung wird im folgenden unter Bezugnahme auf die Beispiele näher beschrieben:

**Beispiel**

Tabelle 1

| Zusammensetzung der erfindungsgemäßen (B, C) und des herkömmlichen (A) 2K-Systems | | | |
|---|---|---|---|
| **Bestandteile Zusammensetzung** | A | B | C |
| | (Gew.-Teile) | | |
| **Komponente I** | | | |
| Isocyonathärter[8] | 33 | 33.5 | 33.6 |
| **Komponente II** | | | |
| OH-Acrylat[b] | 83.97 | 75 | 67,3 |
| Oligomeres Polyol[i] | | 4.5 | 9.0 |
| TIN 384[c] | 1.2 | 1.2 | 1.2 |
| TIN 292[d] | 1.0 | 1.0 | 1.0 |
| DBTL[e] | 0.004 | 0.004 | 0.004 |
| Worlee[R]-ADD315[f] | 0.096 | 0.096 | 0.096 |
| ZN 73-1280[g] | 1.5 | 1.5 | 1.5 |
| Butylglykolacetat | 3.93 | 3.93 | 3.93 |
| Xylol | 0.2 | 4.67 | 4.67 |
| Solventnaphtha | | | 3.2 |
| GB-Ester[h] | 4.5 | 4.5 | 4.5 |
| Ethoxypropylacetat | 2.0 | 2.0 | 2.0 |
| Butanol | 1.6 | 1.6 | 1.6 |
| Summe | 100 | 100 | 100 |

a) = 80%ige Anlösung v. Desmodur N3390 (Polyisocyanat auf Basis Hexamethylendiisocyanat der Firma Bayer) in Butylacetat u. Solventnaphtha
b) = übliches und bekanntes Acrylatharz aus Styrol, n-Butylmethacrylat, t-Butylacrylat, Hydroxipropylmethacrylat u. Acrylsäure als Acrylatharz (B) (verdünnt auf 53 % Feststoffgehalt mit einer Mischung aus Methoxipropylacetat, Burtylglykolacetat und Butylacetat)
i) = erfindungsgemäß zu verwendendes oligomeres Polyol I (Kennzeichen: OH-Zahl 350, Viskosität 27,2 dPas bei 23° [Platte-Kegel-Viskosimeter], $M_n$ = 561, $M_w$ = 1068)
c) = handelsübliches Lichtschutzmittel Tinuvin 384[R] der Firma Ciba Specialty Chemical Inc.
d) = handelsübliches Lichtschutzmittel Tinuvin 292[R] der Firma Ciba Specialty Chemical Inc.
e) = Dibutylzinndilaurat
f) = handelsübliches Verlaufsadditiv der Firma Worlee, D-Lauenburg
g) = 5%ige Lösung eines mit Plyether substituierten Polydimethylsiloxans in Xylol
h) = Glykolsäure-butylester der Firma Wacker

| Viskosität der Komponente II (DIN 4-Becher s bei 23°C): | | | |
|---|---|---|---|
| Zusammensetzung (Gew.-Teile) | A | B | C |
| | 29s | 22s | 20,5s |
| Festkörper Komponente I u. II (1h 125°C) bei Verarbeitungsviskosität: | | | |
| | 53,6% | 58,7% | 60,5% |

Lacktechnische Prüfungen:

1. BART-Test (Chemikalienbeständigkeit)

Der BART (BASF ACID RESISTANCE TEST) dient der Ermittlung der Beständigkeit von Lackoberflächen gegen Säuren, Laugen und Wassertropfen. Dabei wird die Beschichtung auf einem Gradientenofen nach der Einbrennung weiteren Temperaturbelastungen ausgesetzt (30 min 40°C, 50°C, 60°C und 70°C). Zuvor werden die Testsubstanzen (Schwefelsäure 1%ig, 10%ig, 36%ig; schweflige Säure 6%ig; Salzsäure 10%ig; Natronlauge 5%ig; VE (=vollentsalztes) Wasser - 1,2,3 bzw. 4 Tropfen definiert mit einer Dosierpipette aufgebracht. Im Anschluß an die Einwirkung der Substanzen werden diese unter fließendem Wasser entfernt und die Beschädigungen nach 24 h entsprechend einer vorgegebenen Skala visuell beurteilt:

| Benotung | Aussehen |
|---|---|
| 0 | kein Defekt |
| 1 | leichte Markierung |
| 2 | Markierung / Vermattung / keine Erweichung |
| 3 | Markierung / Vermattung / Farbtonveränderung / Erweichung |
| 4 | Risse / beginnende Durchätzung |
| 5 | Klarlack entfernt |

Es wird jede einzelne Markierung (Spot) ausgewertet und das Ergebnis für jede Beschichtung in geeigneter Form (z.B. Notensummen für eine Temperatur) festgehalten. Die Ergebnisse finden sich in der Tabelle 1.

Tabelle 1

| **Ergebnis der lacktechnischen Prüfung nach dem BART-Test** | | | | | | | | | | | | |
|---|---|---|---|---|---|---|---|---|---|---|---|---|
| | **Zusammensetzung A** | | | | **Zusammensetzung B** | | | | **Zusammensetzung C** | | | |
| **Temperatur (°C)** | **40** | **50** | **60** | **70** | **40** | **50** | **60** | **70** | **40** | **50** | **60** | **70** |
| $H_2SO_4$ 1%ig | 0 | 0 | 0 | 4,5 | 0 | 0 | 0 | 4,5 | 0 | 0 | 0 | 4,5 |
| $H_2SO_4$ 10%ig | 0 | 0 | 0 | 4,5 | 0 | 0 | 0 | 4,5 | 0 | 0 | 0 | 4,5 |

Tabelle 1 (fortgesetzt)

| Ergebnis der lacktechnischen Prüfung nach dem BART-Test | | | | | | | | | | | | |
|---|---|---|---|---|---|---|---|---|---|---|---|---|
| | Zusammensetzung A | | | | Zusammensetzung B | | | | Zusammensetzung C | | | |
| **Temperatur (°C)** | **40** | **50** | **60** | **70** | **40** | **50** | **60** | **70** | **40** | **50** | **60** | **70** |
| $H_2SO_4$ 36%ig | 0 | 0 | 0 | 4,5 | 0 | 0 | 0 | 4,5 | 0 | 0 | 0 | 4,5 |
| HCl 10%ig | 0 | 0 | 0 | 2 | 0 | 0 | 0 | 2 | 0 | 0 | 0 | 2 |
| $H_2SO_3$ 5%ig | 0 | 0 | 0 | 4 | 0 | 0 | 0 | 4,5 | 0 | 0 | 0 | 4,5 |
| NaOH 5%ig | 0 | 0 | 0 | 1 | 0 | 0 | 0 | 1 | 0 | 0 | 0 | 1,5 |
| VE-Wasser 1 | 0 | 0 | 1,5 | 1 | 0 | 0 | 0 | 2 | 0 | 0 | 0,5 | 2 |
| VE-Wasser 2 | 0 | 0 | 0 | 2 | 0 | 0 | 0,5 | 2 | 0 | 0 | 0 | 2 |
| VE-Wasser 3 | 0 | 0 | 0 | 2 | 0 | 0 | 0,5 | 2 | 0 | 0 | 1 | 2 |
| VE-Wasser 4 | 0 | 0 | 0 | 1 | 0 | 0 | 1 | 1,5 | 0 | 0 | 1 | 1 |
| **Summe Säure** | **0** | **0** | **0** | **20,5** | **0** | **0** | **0** | **21** | **0** | **0** | **0** | **21,5** |
| **Summe Wasser** | **0** | **0** | **1,5** | **6** | **0** | **0** | **2** | **7,5** | **0** | **0** | **2,5** | **7** |

**2. Sandtest (Kratzbeständigkeit)**

Beim Sandtest wird die Lackoberfläche mit Sand belastet (20g Quarz-Silbersand 1.5-2.0 mm). Der Sand wird in einen PE-Becher (Boden plan abgeschnitten) gegeben, der fest auf der Prüftafel befestigt wird. Es werden die gleichen Prüftafeln wie oben im Bürstentest beschrieben verwendet. Mittels eines Motorantriebes wird die Tafel mit dem Becher und dem Sand in Schüttelbewegungen versetzt. Die Bewegungen des losen Sandes verursacht dabei die Beschädigung der Lackoberfläche (100 Doppelhübe in 22s). Nach der Sandbelastung wird die Prüffläche vom Abrieb gereinigt, unter einem kalten Wasserstrahl vorsichtig abgewischt und anschließend mit Druckluft getrocknet. Gemessen wird der Glanz nach DIN 67530 vor und nach Beschädigung bei 20°.

Mit diesem Prüfverfahren wird die Beständigkeit (scratch resistance) von Lackoberflächen (Klarlacke und Decklacke) gegen Waschbürstenkratzer geprüft. Das Verfahren ist eine gute Nachstellung der Belastung einer Lackoberfläche in einer Waschanlage.

Die Ergebnisse des Tests finden sich in der Tabelle 2.

Tabelle 2

| Ergebnisse des Sandtests | | | |
|---|---|---|---|
| **Glanzwerte[a)]** | **Zusammensetzung A** | **Zusammensetzung B** | **Zusammensetzung C** |
| Ausgangsglanz | 84 | 84 | 84 |
| Restglanz | 53,5 | 55,5 | 56,5 |
| Glanz nach 2h, 40 °C | 55,3 | 58,1 | 60,2 |
| Glanz nach 2h, 60 °C | 57,1 | 64,3 | 72,1 |

a) gemessen bei 20°C:

Die Ergebnisse des Bart-Tests einerseits und des Sandtests andererseits untermauern, daß die erfindungsgemäßen Zweikomponenten-Systeme (B und C) dem herkömmlichen Zweikomponenten-Systemen (A) in der hohen Säurefestigkeit gleichkommen, dieses in der Kratzbeständigkeit, insbesondere in Reflowverhalten bei erhöhten Temperaturen, und dem Festkörpergehalt deutlich übertreffen.

## Patentansprüche

1. Beschichtungsmittel **dadurch gekennzeichnet, daß** es wenigstens ein Polyol I enthält, das erhältlich ist, indem man wenigstens ein Oligomer der allgemeinen Formel I,

$$R^1R^2C =[=CH\text{-}R\text{-}CH=]_n=CR^3R^4 \qquad (I)$$

worin R = $-(-CH_2-)_m-$,
worin der Index m eine ganze Zahl von 1 bis 6 bedeutet, oder

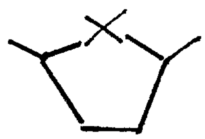

worin X = $-CH_2-$ oder ein Sauerstoffatom;

$R^1$, $R^2$, $R^3$ und $R^4$ unabhängig voneinander= Wasserstoffatome oder Alkyl; und

Index n = eine ganze Zahl von 1 bis 15;

hydroformyliert und die hierbei resultierenden aldehydgruppenhaltigen Produkte I zu den Polyolen I reduziert werden, welche gegebenenfalls teilweise oder vollständig hydriert werden.

2. Das Beschichtungsmittel nach Anspruch 1,
**dadurch gekennzeichnet, daß** der Index m = 3 ist.

3. Das Beschichtungsmittel nach einem der Ansprüche 1 oder 2,
**dadurch gekennzeichnet, daß** das Polyol I eine Hydroxylzahl von 200 bis 650, vorzugsweise 250 bis 450 aufweist.

4. Das Beschichtungsmittel nach einem der Ansprüche 1 bis 3,
**dadurch gekennzeichnet, daß** das Polyol I hierin in einer Menge von 5 bis 50 Gew.-%, bezogen auf den Festkörper, enthalten ist.

5. Das Beschichtungsmittel nach einem der Ansprüche 1 bis 4,
**dadurch gekennzeichnet, daß** es weitere, vorzugsweise hydroxyfunktionelle Bindemittel enthält.

6. Das Beschichtungsmittel nach Anspruch 5,
**dadurch gekennzeichnet, daß** es hydroxyfunktionelle Bindemittel auf der Basis von Polyacrylaten, Polyestern, Polyurethanen, acrylierten Polyurethanen, acrylierten Polyestern, Polylactonen, Polycarbonaten, Polyethern und/oder (Meth)Acrylatdiolen enthält.

7. Das Beschichtungsmittel nach einem der Ansprüche 1 bis 6,
**dadurch gekennzeichnet, daß** es bei Temperaturen von bis zu 180 °C, vorzugsweise 60 bis 180 °C härtbar ist.

8. Verfahren zur Herstellung von Beschichtungsmitteln,
**dadurch gekennzeichnet, daß** 5 bis 20 Gew.-% des Festkörpers eines Beschichtungsmittels durch wenigstens

ein Polyol I substituiert werden, welches erhältlich ist, indem man wenigstens ein Oligomer der allgemeinen Formel I,

$$R^1R^2C=[=CH-R-CH=]_n=CR^3R^4 \qquad (I)$$

worin R = $-(-CH_2-)_m-$, worin der Index m eine ganze Zahl von 2 bis 6 bedeutet, oder

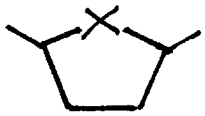

worin X = $-CH_2-$ oder ein Sauerstoffatom;

$R^1$, $R^2$, $R^3$ und $R^4$ unabhängig voneinander= Wasserstoffatome oder Alkyl; und

Index n = eine ganze Zahl von 1 bis 15;

hydroformyliert und die hierbei resultierenden aldehydgrupperhaltigen Produkte I zu den Polyolen I reduziert werden, welche gegebenenfalls teilweise oder vollständig hydriert werden.

**9.** Das Verfahren nach Anspruch 8,
**dadurch gekennzeichnet, daß** bis zu 40, vorzugsweise bis zu 30, besonders bevorzugt bis zu 20 und insbesondere bis zu 10 Gew.-% des Festkörpers durch wenigstens ein Polyol I substituiert werden.

**10.** Das Verfahren nach Anspruch 8 oder 9,
**dadurch gekennzeichnet, daß** das Beschichtungsmittel weitere, vorzugsweise hydroxyfunktionelle Bindemittel enthält.

**11.** Das Verfahren nach einem der Ansprüche 8 bis 10,
**dadurch gekennzeichnet, daß** es hydroxyfunktionelle Bindemittel auf der Basis von Polyacrylaten, Polyestern, Polyuerthanen, acrylierten Polyurethanen, acrylierten Polyestern, Polylactronen, Polycarbonaten, Polyethern und/oder (Meth)Acrylatdiolen enthält.

**12.** Verwendung der Beschichtungsmittel gemäß einem der Ansprüche 1 bis 7 oder der nach dem Verfahren gemäß einem der Ansprüche 8 bis 11 hergestellten Beschichtungsmittel zur Beschichtung von Metall, Kunststoff, Glas Holz oder Papier.

Europäisches Patentamt

# EUROPÄISCHER RECHERCHENBERICHT

Nummer der Anmeldung
EP 99 10 2115

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
| X | WO 97 16467 A (UNION CARBIDE CHEM PLASTIC) 9. Mai 1997<br>* Ansprüche 1-12,15,17,18 * | 1-12 | C08G18/32<br>C09D175/04<br>C09D201/06 |
| A | EP 0 017 503 A (HENKEL CORP) 15. Oktober 1980<br>* Ansprüche 1-29 * | 1-12 | |
| | | | **RECHERCHIERTE SACHGEBIETE (Int.Cl.6)** |
| | | | C08G<br>C09D |

Der vorliegende Recherchenbericht wurde für alle Patentansprüche erstellt

| Recherchenort | Abschlußdatum der Recherche | Prüfer |
|---|---|---|
| DEN HAAG | 20. Mai 1999 | Decocker, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 99 10 2115

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-05-1999

| Im Recherchenbericht angeführtes Patentdokument | Datum der Veröffentlichung | Mitglied(er) der Patentfamilie | Datum der Veröffentlichung |
|---|---|---|---|
| WO 9716467 A | 09-05-1997 | AU 7671796 A | 22-05-1997 |
| EP 0017503 A | 15-10-1980 | US 4216343 A | 05-08-1980 |
| | | US 4216344 A | 05-08-1980 |
| | | US 4304945 A | 08-12-1981 |
| | | AT 377973 B | 28-05-1985 |
| | | AT 184980 A | 15-10-1984 |
| | | CA 1144573 A | 12-04-1983 |
| | | US 4307224 A | 22-12-1981 |
| | | JP 55153733 A | 29-11-1981 |
| | | US 4582946 A | 15-04-1986 |

EPO FORM P0461

Für nähere Einzelheiten zu diesem Anhang : siehe Amtsblatt des Europäischen Patentamts, Nr.12/82